# EUROPÄISCHE PATENTANMELDUNG

(11) **EP 2 385 613 A2**
(43) Veröffentlichungstag der Anmeldung: **09.11.2011**
(21) Anmeldenummer: 11161810.4
(22) Anmeldetag: 11.04.2011
(51) Int. Cl.: H02K 7/18, H02K 11/00

(54) **Windturbine mit Zustandsüberwachungssystem**

(30) Priorität: 06.05.2010 DE 102010019644
(71) Anmelder: Siemens Aktiengesellschaft, 80333 Munich (DE)
(72) Erfinder: Wohlleb, Matthias, 52064, Aachen (DE)

(57) **Zusammenfassung**

Eine Windturbine (24) mit einem Zustandsüberwachungssystem (1) hat einen Generator (3) mit einer Generatorspule (4), eine Steuereinheit (2) und einen mit der Steuereinheit (2) verbundenen Sensor (10, 11). Ein von der Steuereinheit (2) in Abhängigkeit von dem Sensor (10, 11) steuerbares Abschaltelement (7) ist in einer Hochspannungsleitung (5) von der Generatorspule (4) zum Stromnetz (6) angeordnet. Eine die Steuereinheit (2) mit der Generatorspule (4) verbindende Leitung (5, 8) weist eine integrierte Leitungsüberwachung (9) auf.

## Beschreibung

Die Erfindung betrifft eine Windturbine mit einem Zustandsüberwachungssystem und ein Zustandsüberwachungssystem für eine Windturbine. Insbesondere ist die Erfindung auf den Schutz der elektrischen Systeme und der Windturbine insgesamt gerichtet.

Eine Windturbine verwendet einen Generator, um Rotationsenergie in elektrische Energie umzusetzen. Die elektrische Energie wird üblicherweise als 3-phasige Hochspannung ausgegeben. Eine Spule oder Wicklung des Generators liefert elektrische Energie, wenn der Rotor sich dreht. Die Rotationsgeschwindigkeit bestimmt die Frequenz der Wechselströme in den Spulen.

Die Frequenzen der drei Phasen müssen für den Fall eines Einbruchs oder einer Abnahme des Generators oder für den Wechsel der Windrichtung stabilisiert werden. Bei einem beginnenden Spannungsabfall oder brownout kann der Generator magnetisiert werden, was zu einer Leistungsspitze führen kann. Diese plötzliche Leistungsspitze kann zu einer Abnutzung oder Beschädigung des Getriebes führen, das mit dem Generator verbunden ist.

Stabilisierungsmittel wie zum Beispiel Thyristoren kommen zum Einsatz, um diese Leistungsspitzen in Form von instabilen Frequenzen auf allen Phasen in einen stabilen Zustand zu glätten. Die Frequenzstabilisierung geschieht durch das Ein- und Ausschalten der Thyristoren. Die Steuerung der Thyristoren übernimmt eine Steuereinheit, zum Beispiel mit einem Prozessor oder Mikroprozessor. Die Thyristoren erlauben eine kontinuierliche Regulierung des elektrischen Stroms.

Die Steuereinheit erhält Daten von Sensoren, die an wichtigen Komponenten der Windturbine angeordnet sind, wie zum Beispiel dem Generator, dem Hauptlager, dem Getriebe oder dem Rahmen der Gondel. Die Sensoren sind üblicherweise mittels Koaxialkabeln mit der Steuereinheit verbunden. Die Steuereinheit, die Sensoren und die Thyristoren bilden ein Zustandsüberwachungssystem. Der Zustand des Systems kann an eine Leitstelle übertragen werden, wo die Daten analysiert werden. Die Datenübertragung kann durch eine GSM Nachricht realisiert werden, die zum Beispiel alle zehn Sekunden gesendet wird.

Der Artikel "Protection for High-Voltage Systems", ATZTechnology 6/2007 (Dezember 2007), Seiten 27 bis 28 beschreibt ein Schutzsystem für ein Hochspannungskabel von Hybrid-Pkws. Für ein Hochspannungskabel mit einem integrierten Sensor können kritische Zustände wie mechanische Beschädigung der äußeren Hülle, Kurzschlüsse und lokale Überhitzung erkannt werden. Der integrierte Sensor überträgt die Information zu einer Erkennungseinheit, welche die Hochspannungsversorgung für dieses Kabel abschalten kann, bevor eine kritische Situation eintritt.

Der Erfindung liegt die Aufgabe zugrunde, die Sicherheit einer Windturbine insbesondere der elektrischen Komponenten weiter zu verbessern.

Diese Aufgabe wird mit den Merkmalen des Anspruchs 1 beziehungsweise 12 gelöst. Vorteilhafte Weiterbildungen der Erfindungen sind in den abhängigen Ansprüchen definiert.

Gemäß einem ersten Aspekt der Erfindung hat eine Windturbine mit einem Zustandsüberwachungssystem einen Generator mit einer Generatorspule, eine Steuereinheit, einen mit der Steuereinheit verbundenen Sensor und ein von der Steuereinheit in Abhängigkeit von dem Sensor steuerbares Abschaltelement in einer Hochspannungsleitung von der Generatorspule zum Stromnetz. Eine die Steuereinheit mit der Generatorspule verbindende Leitung hat eine integrierte Leitungsüberwachung. Mit der Erfindung können nun auch die Leitungen selbst überwacht und geschützt werden. Damit wird eine neue Stufe der Sicherheit erreicht. Bislang konnten die Daten von Sensoren verarbeitet werden, nun kann auch die Verbindung zu den Sensoren und weitere Leitungen überwacht werden. Es können Signal- und Hochspannungsleitungen überwacht werden. Ein weiterer Vorteil ist, dass die Wartungsintervalle länger sein können, weil die Windturbine besser in einem definierten Zustandsbereich gehalten werden kann und so keine übermäßigen Verschleißsituationen auftreten können. Viele Fehler können erkannt werden, bevor sie ein kritisches Ausmaß erreichen. Entsprechende Gegenmaßnahmen wie zum Beispiel die Trennung des Generators vom Netz können sofort eingeleitet werden. Die Information der Leitungsüberwachung fließt in das Zustandsmodell ein, wird also gewissermaßen global verwendet und nicht nur lokal für die zu überwachende Leitung. Entsprechend kann die Information der Leitungsüberwachung einer bestimmten Leitung genutzt werden, um in einem ganz anderen Bereich des Systems Gegenmaßnahmen einzuleiten.

Eine die Steuereinheit mit dem Sensor verbindende Leitung kann eine integrierte Leitungsüberwachung haben. Dies ermöglicht die Überwachung und den Schutz der Leitung zu dem Sensor. Damit wird neben der Überwachung durch den Sensor die Verbindung zum Sensor überwacht, was die Sicherheit des Systems erhöht. Die Leitungsüberwachung kann für alle Sensoren oder für eine ausgewählte wichtige Gruppe eingesetzt werden.

Der Sensor kann einen Signaleingang zum Empfang von Information hinsichtlich der Leitungsüberwachung haben. Der Sensor empfängt das Signal oder die Signale der Leitungsüberwachung und überwacht die Leitung selbst. Der Sensor verarbeitet zusätzlich zu den originären Sensorsignalen die Signale der Leitungsüberwachung und signalisiert im Fehlerfall der Steuereinheit einen Fehler. Dies kann eine bloße "Fehler vorhanden" Meldung oder eine spezifische Fehlermeldung sein. Die spezifische Fehlermeldung kann zum Beispiel den genauen Fehlerort, die Ursache und/oder die Wichtigkeit des Fehlers enthalten. Die Fehlermeldung kann kodiert übertragen werden. Eine die Steuereinheit mit dem Abschaltelement verbindende Leitung kann eine integrierte Leitungsüberwachung haben. Dies erlaubt eine Überwachung der Leitung zu dem für die Sicherheit wichtigen Abschaltelement, das im Notfall den Generator vom Netz trennen soll. Im Falle eines Leitungsdefektes können Maßnahmen wie eingeschränkter Betrieb oder sofortige Abschaltung eingeleitet werden. Gefährdungen können teilweise bereits vor dem Defekt erkannt werden. Dann kann durch geeignete Maßnahmen wie die Abschaltung oder Stilllegung einzelner Komponenten die gefährdete Komponente vor Beschädigung geschützt werden.

Die Windturbine kann eine Bremse für die Windturbine haben und eine die Steuereinheit mit der Bremse verbindende Leitung kann eine integrierte Leitungsüberwachung haben. Falls während des Betriebs des Generators die Verbindung zum Stromnetz abreißt beispielsweise durch einen Fehler in einer Stromleitung, beschleunigt die Windturbine. Zur Vermeidung aktiviert die Steuereinheit aerodynamische und/oder mechanische Bremsen. Die Sicherheit dieses wichtigen Subsystems wird durch die Leitungsüberwachung erhöht, da nun Fehler in der Signalübertragung zu und von der Bremse erkannt werden und entsprechende Maßnahmen ergriffen werden können.

Die Steuereinheit kann für die Leitung mit integrierter Leitungsüberwachung einen Signaleingang zum Empfang von Information hinsichtlich der Leitungsüberwachung haben. Damit kann die Steuereinheit das oder die Signale der Leitungsüberwachung erhalten und direkt auswerten. Bei Sensoren erhält die Steuereinheit demnach zwei Signale, eines von dem Sensor und ein weiteres von der Leitungsüberwachung. Es können auch mehrere Signale und Signaleingänge pro Sensor oder pro Anderem mit der Steuereinheit verbundenem System vorgesehen sein. So kann auch die Stromleitung für den Sensor mit einer integrierten Leitungsüberwachung ausgestattet sein. Bei bidirektionalem Signalverkehr mit zwei getrennten Leitungen können beide Leitungen eine integrierte Leitungsüberwachung haben. Jeder Leitungsüberwachung kann ein eigener Signaleingang in der Steuereinheit zugeordnet werden, so dass Fehlermeldungen den Leitungen gewissermaßen per Hardware zugeordnet sind. Per Signalkodierung können Fehler den entsprechenden Leitungen zugeordnet werden, wenn zum Beispiel nur ein oder wenige Signaleingänge an der Steuereinheit vorgesehen sind. Die Überwachung und Auswertung der Signale durch die Steuereinheit erlaubt flexible Ansätze und eine schnelle Reaktion auf Fehlerfälle, da die Steuereinheit die zu ergreifenden Maßnahmen veranlasst.

Die Leitungsüberwachung kann einen integrierten Sensor haben. Dieser Sensor ist in der Leitung, idealer weise innerhalb der Ummantlung der Leitung enthalten und überwacht die Leitung beispielsweise auf Beschädigung der Außenhaut, Kurzschlüsse und Überhitzung. Es können auch mehrere zum Beispiel auf bestimmte Überwachungen spezialisierte Sensoren pro Leitung zum Einsatz kommen. Eine Überwachung der Verbindungen (zum Beispiel Stecker) an den Leitungsenden kann ebenfalls implementiert sein. Der Sensor kann an der Außenseite der Leitung angeordnet sein. So können die meisten Störungen oder Fehler entdeckt werden, bevor die weiter innen liegende Leitung beschädigt wird. Auch Bussysteme können mit der integrierten Leitungsüberwachung ausgerüstet sein.

Der integrierte Sensor kann eine leitfähige Schicht haben, die spiralförmig um einen Leitungskern gewickelt ist. Ein Isolator kann zwischen dem Leitungskern und der leitfähigen Schicht angeordnet sein. Dieser einfache Aufbau erlaubt eine gute Überwachung bei geringen Herstellungskosten.

Die die Steuereinheit mit der Generatorspule verbindende Leitung kann einen Teil der Hochspannungsleitung aufweisen. Neben Signalleitungen kann auch die gesamte Hochspannungsleitung oder ein Teil davon mit einer integrierten Leitungsüberwachung ausgerüstet sein. So kann der Leitungsbereich, der die vom Generator erzeugte Energie überträgt, überwacht und geschützt werden.

Die Hochspannungsleitung von der Generatorspule bis zu dem Abschaltelement kann eine integrierte Leitungsüberwachung haben. Damit wird ein gewissermaßen innerer Kreis überwacht, der sich vom Netz gesehen hinter den Abschaltelementen befindet.

Die Windturbine kann drei Generatorspulen und drei Hochspannungsleitungen mit jeweils einem Abschaltelement haben. Dies erlaubt einen einfachen Einsatz in dem Dreiphasenwechselstromsystem (auch Drehstrom genannt), das in der elektrischen Energieversorgung weit verbreitet ist.

Gemäß einem zweiten Aspekt der Erfindung hat ein Zustandsüberwachungssystem für eine wie oben beschrieben Windturbine eine Steuereinheit, einen mit der Steuereinheit verbundenen Sensor, ein von der Steuereinheit in Abhängigkeit von dem Sensor steuerbares Abschaltelement in einer Hochspannungsleitung von einer Generatorspule zum Stromnetz und eine die Steuereinheit mit der Generatorspule verbindende Leitung mit integrierter Leitungsüberwachung. Ein derartiges Zustandsüberwachungssystem kann direkt bei Herstellung in eine Windturbine eingebaut werden oder später nachgerüstet werden.

Im Folgenden wird die Erfindung anhand der Zeichnungen näher beschrieben, in denen zeigen:
Fig. 1 ein Blockschaltbild eines Zustandsüberwachungssystems für eine Windturbine.
Fig. 2 eine Windturbine mit Zustandsüberwachungssystem.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

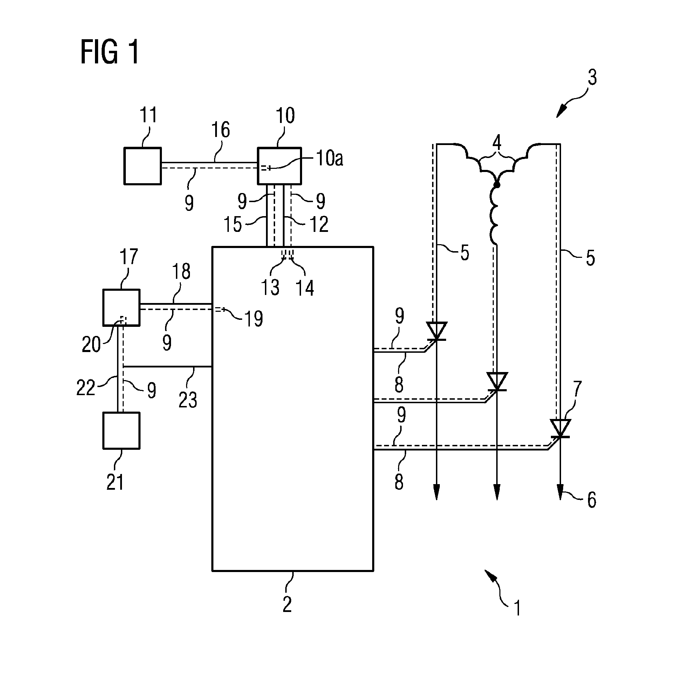

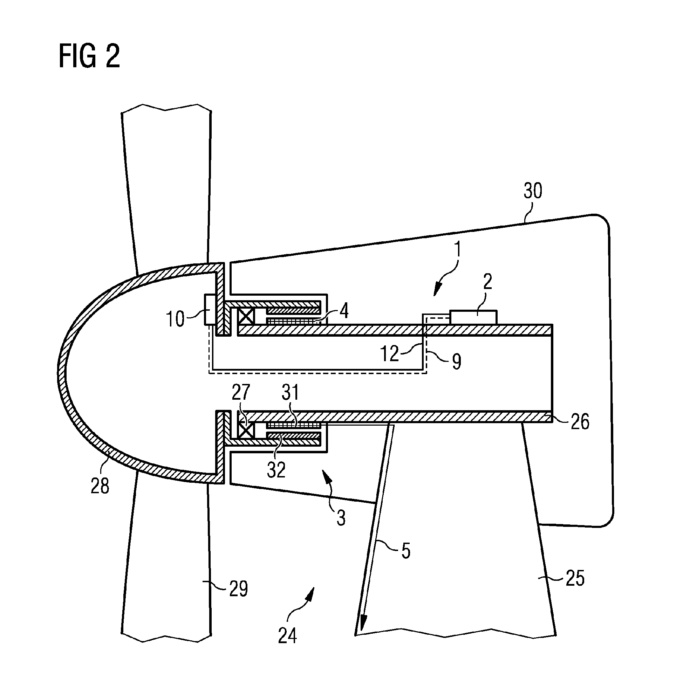

Figur 1 zeigt ein Zustandsüberwachungssystem 1 für eine Windturbine, wie beispielhaft in Figur 2 gezeigt. Das Zustandsüberwachungssystem 1 umfasst eine Steuereinheit 2 mit einem Computer, Mikro-Controller oder einer ähnlichen Recheneinheit. Die Steuereinheit 2 analysiert empfangene Daten mit gewissen Algorithmen, die in Hard- und/oder Software programmiert sein können. Es können watch-dogs, also interne Kontrollalgorithmen, zur Überwachung der Berechnungen eingesetzt werden. Basierend auf den neu eintreffenden und in der Steuerung 2 bereits vorhandenen Informationen berechnet die Steuerung 2 ein Zustandsmodell der Windturbine. Auf Grundlage des Zustandsmodells detektiert die Steuerung 2 kritische Situationen oder Fehler und leitet entsprechende Gegenmaßnahmen ein. Die Steuerung 2 kann auch eine hierarchisch untergeordnete Steuerung wie zum Beispiel eine Generatorsteuerung sein. In diesem Fall läuft das Zustandsmodell zumindest nicht vollständig auf der Generatorsteuereinheit. Die Generatorsteuereinheit kann vielmehr Bestandteil des Zustandsmodells sein. Die Berechnung läuft auf einem zentralen Rechner, angeordnet in der Windturbine oder der Leitstelle, oder auf verteilten Rechnern ab.

Die Steuerung 2 hat eine Kommunikationsschnittstelle, wie zum Beispiel ein GSM-Modem, um kontinuierlich oder mindestens im Fehlerfall Nachrichten an eine Leitstelle oder Zentrale zu schicken. Die Steuerung kann Nachrichten ebenfalls empfangen, so dass eine Ansteuerung der Steuerung 2 aus der Leitstelle möglich ist. Die Programmierung der Steuerung 2 kann derart sein, dass bei bestimmten Situationen oder Fehlern die Steuerung 2 nicht autark handelt, sondern eine Nachricht an die Zentrale schickt, eine Anweisung von der Leitstelle erhält und diese dann anschließend ausführt.

Ein Generator 3 der Windturbine hat drei Generatorspulen oder -wicklungen 4 für ein Energieübertragungssystem vom Typ eines Dreiphasenwechselstromsystems. Die Generatorspulen 4 sind mit jeweils einer Hochspannungsleitung 5 an ein Stromnetz 6 angeschlossen. In der Hochspannungsleitung 5 können vor dem Netz weitere Elemente wie zum Beispiel Steuerelektronik oder Umsetzer zwischengeschaltet sein.

In jeder Hochspannungsleitung 5 ist ein Abschaltelement 7 in Form eines Thyristors vorhanden. Der Thyristor ist über eine Steuerleitung 8 mit der Steuereinheit 2 verbunden, so dass diese das Abschaltelement 7 steuern kann. Die Abschaltelemente 7 können zum einen zur Stabilisierung der Frequenzen der drei Phasen und zum anderen zum Trennen des Generators 3 vom Netz 6 verwendet werden. In beiden Fällen werden die Abschaltelemente 7 von der Steuereinheit 2 angesteuert.

Das Zustandsüberwachungssystem 1 umfasst für ausgewählte Leitungen oder Abschnitte von Leitungen eine integrierte Leitungsüberwachung 9. Die integrierte Leitungsüberwachung 9 überwacht die zugeordnete Leitung unter anderem auf Beschädigungen, zum Beispiel mechanisch oder chemisch durch Säure oder Gase, Kurzschlüsse gegen Masse oder durch Überhitzung zum Beispiel infolge von Lichtbögen, Entladungen oder Feuer.

Dazu enthält die integrierte Leitungsüberwachung 9 einen in die Leitung integrierten Sensor, der an einem äußeren Bereich der Leitung angeordnet ist, um eventuelle Beschädigungen oder Gefahren zu detektieren, bevor sie die weiter innen liegende Leitung erreichen. Der integrierte Sensor ist wärmeempfindlich, um auch den Fall einer Überhitzung zu erkennen.

Der Sensor kann eine leitfähige Schicht haben, die spiralförmig um einen Leitungskern gewickelt ist. Ein Isolator kann zwischen dem Leitungskern und der leitfähigen Schicht angeordnet sein. Durch Überwachung der elektrischen Eigenschaften der leitfähigen Schicht können Rückschlüsse auf die jeweilige Situation gezogen werden.

Die integrierte Leitungsüberwachung 9 wird zunächst am Beispiel der Steuerleitung 8, die auch bidirektional betrieben werden kann, und an dem zwischen dem Abschaltelement 7 und der Generatorspule 4 liegenden Abschnitt der Hochspannungsleitung 5 beschrieben. Diese Bereiche sind mit einer integrierten Leitungsüberwachung 9 versehen. Diese Abschnitte (auf allen drei Phasen) sind wichtig für das Zustandsüberwachungssystem 1, da der Generator gewissermaßen das Herzstück des elektrischen Systems ist. Über diese Leitungen ist die Steuereinheit 2 direkt mit den Generatorspulen 4 und nicht dargestellten internen Sensoren des Generators verbunden. Alternativ können die Generatorspule 4 und die internen Sensoren des Generators 3 auch über zusätzliche separate Leitungen (nicht dargestellt) mit der Steuereinheit 2 verbunden sein, die dann ebenfalls eine integrierte Leitungsüberwachung aufweisen.

Über die Generatorspulen 4 und die internen Sensoren des Generators erhält die Steuerung 2 unter anderem Informationen über Spannung, Strom und Frequenz der drei Phasen und die Temperatur des Generators 3.

Weitere Sensoren, beispielhaft und nicht beschränkend sind zwei Sensoren 10 und 11 dargestellt, liefern der Steuerung 2 Daten unter anderem über die Windgeschwindigkeit, die Richtung des Windnachführungssystems, die Rotationsgeschwindigkeiten der schnell laufenden und der langsam laufenden Welle, die Temperaturen von Getriebeöl und Getriebelagern. Verschiedene Hydraulikkreise, hydraulische Druckpegel, Ventilfunktionen, Bremssättel von mechanischen Bremsen und auch Notbremsen werden ebenfalls mit Sensoren überwacht und entsprechende Sensordaten an die Steuereinheit 2 übertragen.

Der Sensor 10 ist mittels einer Sensorleitung 12 zur Übertragung von Sensordaten wie zum Beispiel Messdaten mit der Steuereinheit 2 verbunden. Die Sensorleitung 12 enthält eine integrierte Leitungsüberwachung 9. Die Steuereinheit 2 hat einen ersten Signaleingang 13 für die Sensorleitung 12 und einen zweiten Signaleingang 14 für die Leitungsüberwachung 9. So werden die Sensordaten und die Information der Leitungsüberwachung getrennt von der Steuereinheit 2 empfangen und dann entsprechend verarbeitet.

Eine Ausgangsleitung 15 verbindet die Steuereinheit 2 mit dem Sensor 10. Die Ausgangsleitung 15 dient zur Datenübertragung von der Steuereinheit 2 zu dem Sensor 10. Beispielsweise können Konfigurationsdaten zu dem Sensor 10 übertragen werden. Die Ausgangsleitung 15 enthält ebenfalls eine integrierte Leitungsüberwachung 9, um den Status und eventuelle Beschädigungen der Ausgangsleitung 15 zu überwachen.

Der Sensor 11 ist über eine Zwischenleitung 16 mit dem Sensor 10 verbunden, die ebenfalls mit einer Leitungsüberwachung 9 ausgestattet ist. Dieser Sensor 11 ist indirekt mit der Steuereinheit 2 verbunden, nämlich über den Sensor 10. Der Sensor 10 hat einen Signaleingang 10a, an den die Zwischenleitung 16 angeschlossen ist, um die Information der Leitungsüberwachung zu empfangen. Der Sensor 10 übernimmt die Überwachung und Auswertung des Sensors 11 und der Leitungsüberwachung 9 der Zwischenleitung 16 und gibt diese Daten über die Sensorleitung 12 an die Steuereinheit 2 zur Auswertung weiter. Der Sensor 11 ist gewissermaßen ein Sub-Sensor des Sensors 10. Die Daten vom Sensor 10 zu der Steuereinheit 2 können kodiert sein, um den Verdrahtungsaufwand zu reduzieren. Anstelle einer einzelnen Sensorleitung können auch mehrere parallele Leitungen oder ein Bussystem verwendet werden, das dann ebenfalls mit einer Leitungsüberwachung ausgerüstet ist.

Eine Bremse 17 für die Windturbine, zum Beispiel eine mechanische oder aerodynamische Bremse, hat einen oder mehrere interne Sensoren, die Daten über den Zustand der Bremse 17 an die Steuereinheit 2 senden. Dazu ist die Bremse 17 mit einer Leitung 18 mit der Steuereinheit 2 verbunden. Die Leitung 18 ist mit einer Leitungsüberwachung 9 versehen. Die Steuereinheit 2 hat einen dritten Signaleingang 19 für die Leitung 18 mit integrierter Leitungsüberwachung 9. Die Information der Leitungsüberwachung 9 wird an einen Signaleingang 20 der Bremse 17 geleitet, dort als Sensorsignal behandelt und wie die Sensordaten der Bremse 17 an die Steuereinheit 2 übertragen. Die Daten können kodiert sein. Die gemeinsame Übertragung von Sensordaten und Informationen der Leitungsüberwachung ist nicht nur für Aktoren möglich, für die beispielhaft die Bremse 17 gezeigt ist, sondern auch für Sensoren.

Die Bremse 17 wird von einer Energiequelle 21 mit elektrischer Energie versorgt und ist dazu mittels einer Versorgungsleitung 22 mit der Energiequelle 21 verbunden. Die Versorgungsleitung 22 enthält eine Leitungsüberwachung 9 zur Überwachung. Die Leitungsüberwachung 9 ist mit einer Signalleitung 23 mit der Steuereinheit 2 verbunden, um Information der Leitungsüberwachung direkt an die Steuereinheit 2 zu übertragen. Hier ist also die integrierte Leitungsüberwachung 9 direkt mit der Steuereinheit 2 verbunden, obwohl die Leitung 22 mit der integrierten Leitungsüberwachung 9 nicht an die Steuereinheit 2 angeschlossen ist. Auch diese Leitung 22 kann mit einer integrierten Leitungsüberwachung ausgestattet sein.

Dargestellt sind eine Vielzahl von Leitungen mit unterschiedlichen Konfigurationen, die alle über eine integrierte Leitungsüberwachung 9 verfügen. Selbstverständlich können auch Leitungen ohne Leitungsüberwachung an die Steuereinheit 2 oder andere Elemente des Zustandsüberwachungssystems 1 angeschlossen sein.

Das Zustandsüberwachungssystem 1 umfasst die Steuereinheit 2, die Sensoren 10 und 11, den Aktor 17, die Abschaltelemente 7, sowie die Leitungsüberwachungen 9. Die Generatorspulen 4 ebenso wie die generatorinternen Sensoren (nicht dargestellt) können ebenfalls zu dem Zustandsüberwachungssystem 1 gezählt werden, da an ihnen direkte Daten wie Strom und Spannung gemessen werden.

Die Steuereinheit 2 erhält kontinuierlich und/oder im Fehlerfall Informationen von den Sensoren und Leitungsüberwachungen, führt diese in das Zustandsmodell und trifft basierend auf dem Zustandsmodell Entscheidungen. Diese Entscheidungen können an eine Leitstelle weitergeleitet werden und/oder direkt umgesetzt werden, beispielsweise mit Aktoren wie der Bremse 17 oder den Abschaltelementen 7.

Figur 2 zeigt eine Windturbine 24, die mit dem Zustandsüberwachungssystem 1 ausgestattet ist. Die Windturbine 24 hat einen Turm 25, der im Erdboden verankert ist und eine Höhe von über 100 Metern aufweisen kann. Oben am Turm 25 ist die Hauptwelle 26 angeordnet. An einem vorderen Ende der Hauptwelle 26 ist ein Hauptlager 27 angeordnet, das die ortsfeste Hauptwelle 26 mit einer rotierenden Rotornabe 28 beweglich verbindet. An der Rotornabe 28 sind zwei oder mehr Rotorblätter 29 befestigt. Eine Gondel 30 umgibt die ortsfesten Bestandteile am oberen Ende des Turms 25.

Der Generator 3 hat einen ortsfesten Stator 31 mit den Generatorwicklungen oder -spulen 4 und einen rotierenden Rotor 32. Die Spulen 4 können auch am Rotor 32 angeordnet sein. Hochspannungsleitungen 5 verlaufen von den Generatorspulen 4 durch den Turm 25 zum Stromnetz 6.

Das Zustandsüberwachungssystem 1 ist in Figur 2 aus Gründen der Übersichtlichkeit nur mit einigen Komponenten dargestellt. Sämtliche und auch weitere zusätzliche Komponenten aus der detaillierteren Darstellung in Figur 1 können auch in Figur 2 übertragen werden. Entsprechend gelten die zu Figur 1 gemachten Ausführungen auch für Figur 2.

Die Steuereinheit 2 ist an der Hauptwelle 26 befestigt und mit Sensoren 10 mittels einer Sensorleitung 12 mit integrierter Leitungsüberwachung 9 verbunden. Dies ist beispielhaft für einen Sensor 10 gezeigt, der in der Rotornabe 28 angeordnet ist und zum Beispiel ein Hydrauliksystem für die Einstellung des Rotorblattes 29 überwacht. Die Sensorleitung 12 kann zum Beispiel einen Schleifring am Übergang zwischen ortsfesten und rotierenden Teilen enthalten. Auch dieser Schleifring und ebenso Steck- oder sonstige Verbinder der Leitungen können an die integrierte Leitungsüberwachung angeschlossen sein, beispielsweise durch eine eigene Steck- oder Drehverbindung, welche parallel zu der eigentlichen Verbindung der Leitung angeordnet ist.

Die Steuereinheit 2 verarbeitet die empfangenen Sensordaten und Informationen der Leitungsüberwachung und steuert Aktoren wie Bremse und Abschaltelemente an, die aus Gründen der Übersicht nicht dargestellt sind.

Tritt ein Fehlerfall oder ein einem Fehler vorausgehender kritischer Zustand auf, wie zum Beispiel eine mechanische Beschädigung der Hochspannungsleitung 5, aktiviert die Steuereinheit 2 unmittelbar das Abschaltelement 7 der entsprechenden Hochspannungsleitung 5 oder alle 3 Abschaltelemente 7, um elektrische Entladungen oder Kurzschlüsse zu vermeiden. Eine Meldung über Fehlerfall und ergriffene Maßnahmen wird an die Leitstelle geschickt, so dass eine Reparatur in die Wege geleitet werden kann.

## Patentansprüche

1. Windturbine mit einem Zustandsüberwachungssystem (1), aufweisend einen Generator (3) mit einer Generatorspule (4), eine Steuereinheit (2), einen mit der Steuereinheit (2) verbundenen Sensor (10, 11), ein von der Steuereinheit (2) in Abhängigkeit von dem Sensor (10, 11) steuerbares Abschaltelement (7) in einer Hochspannungsleitung (5) von der Generatorspule (4) zum Stromnetz (6),
**dadurch gekennzeichnet, dass**
eine die Steuereinheit (2) mit der Generatorspule (4) verbindende Leitung (5, 8) eine integrierte Leitungsüberwachung (9) aufweist.

2. Windturbine nach Anspruch 1, wobei eine die Steuereinheit (2) mit dem Sensor (10, 11) verbindende Leitung (12, 15, 16) eine integrierte Leitungsüberwachung (9) aufweist.

3. Windturbine nach Anspruch 2, wobei der Sensor (10) einen Signaleingang (10a) zum Empfang von Information hinsichtlich der Leitungsüberwachung aufweist.

4. Windturbine nach einem der Ansprüche 1 bis 3, wobei eine die Steuereinheit (2) mit dem Abschaltelement (7) verbindende Leitung (8) eine integrierte Leitungsüberwachung (9) aufweist.

5. Windturbine nach einem der Ansprüche 1 bis 4, aufweisend eine Bremse (17) für die Windturbine (24), wobei eine die Steuereinheit (2) mit der Bremse (17) verbindende Leitung (18) eine integrierte Leitungsüberwachung (9) aufweist.

6. Windturbine nach einem der Ansprüche 1 bis 5, wobei die Steuereinheit (2) für die Leitung (12) mit integrierter Leitungsüberwachung (9) einen Signaleingang (14) zum Empfang von Information hinsichtlich der Leitungsüberwachung aufweist.

7. Windturbine nach einem der Ansprüche 1 bis 6, wobei die Leitungsüberwachung (9) einen integrierten Sensor aufweist.

8. Windturbine nach Anspruch 7, wobei der integrierte Sensor eine leitfähige Schicht aufweist, die spiralförmig um einen Leitungskern gewickelt ist, und wobei ein Isolator zwischen Leitungskern und leitfähiger Schicht angeordnet ist.

9. Windturbine nach einem der Ansprüche 1 bis 8, wobei die die Steuereinheit (2) mit der Generatorspule (4) verbindende Leitung (5, 8) einen Teil der Hochspannungsleitung (5) aufweist.

10. Windturbine nach einem der Ansprüche 1 bis 9, wobei die Hochspannungsleitung (5) von der Generatorspule (4) bis zu dem Abschaltelement (7) eine integrierte Leitungsüberwachung (9) aufweist.

11. Windturbine nach einem der Ansprüche 1 bis 10, aufweisend drei Generatorspulen (4) und drei Hochspannungsleitungen (5) mit jeweils einem Abschaltelement (7).

12. Zustandsüberwachungssystem für eine Windturbine (24) nach einem der Ansprüche 1 bis 11 aufweisend eine Steuereinheit (2), einen mit der Steuereinheit (2) verbundenen Sensor (10, 11), ein von der Steuereinheit (2) in Abhängigkeit von dem Sensor (10, 11) steuerbares Abschaltelement (7) in einer Hochspannungsleitung (5) von einer Generatorspule (4) zum Stromnetz (6) und eine die Steuereinheit (2) mit der Generatorspule (4) verbindende Leitung (5, 8) mit integrierter Leitungsüberwachung (9).
